# EUROPÄISCHE PATENTSCHRIFT

(11) **EP 0 714 954 B1**
(45) Veröffentlichungstag und Bekanntmachung des Hinweises auf die Patenterteilung: **25.09.2002**
(21) Anmeldenummer: 95810659.3
(22) Anmeldetag: 25.10.1995
(51) Int. Cl.: C09B 44/16, C09B 67/32, D06P 1/08, D21H 21/28

(54) **Kationische Imidazolazofarbstoffe**
Cationic imidazoleazodyestuffs
Colorants cationiques glyoxalin azoiques

(30) Priorität: 03.11.1994 CH 328694
(43) Veröffentlichungstag der Anmeldung: 05.06.1996
(60) Teilanmeldung: 02004226.3
(73) Patentinhaber: Ciba Specialty Chemicals Holding Inc., 4057 Basel (CH)
(72) Erfinder: Möckli, Peter, Dr., CH-4124 Schönenbuch (CH)

(56) Entgegenhaltungen:
- EP-A- 0 174 586
- EP-A- 0 184 991
- DE-A- 3 111 199
- DE-B- 1 098 642
- DE-B- 1 137 815
- US-A- 3 086 003
- DATABASE WPI Section Ch, Week 8340 Derwent Publications Ltd., London, GB; Class A14, AN 83-781692 XP002044828 & SU 979 349 A (UNIV ROST) , 7.Dezember 1982

## Beschreibung

DE 1137815 B , DE 10 98642 B und US 3086003 betreffen Imidazolazofarbstoffen.

Die vorliegende Erfindung betrifft neue kationische Imidazolazofarbstoffe, Verfahren zu deren Herstellung, deren Verwendung zum Färben von Textilmaterialien und insbesondere von Papier sowie zur Synthese dieser Farbstoffe geeignete Zwischenprodukte.

Die neuen Imidazolazofarbstoffe entsprechen der Formel 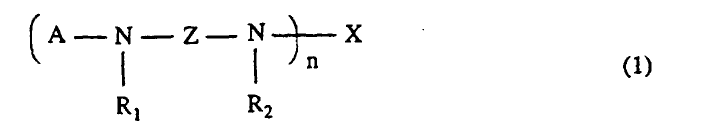 worin A und A₁ unabhängig voneinander je einen Rest der Formel 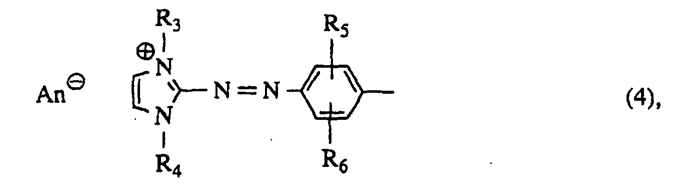
Z der Rest eines Alkylendiamins ist, dessen Alkylengruppen geradkettig, verzweigt oder cyclisch sind und unsubstituiert oder durch Halogen, Alkoxy oder Hydroxy substituiert sind, wobei die Alkylenketten durch -O- oder -NR₁- unterbrochen sein können, oder dass Z unsubstituiertes oder durch Alkyl, Alkoxy oder Halogen substituiertes 1,4-Phenylen oder 1,4-Naphthylen ist oder dass Z zusammen mit den beiden benachbarten N-Atomen und R₁ und R₂ einen Piperazinring bildet,
R₁ und R₂ unabhängig voneinander je Wasserstoff oder gegebenenfalls substituiertes C₁-C₄-Alkyl bedeuten oder zusammen mit den beiden N-Atomen, an die sie gebunden sind, und mit Z oder Z₂ einen 5-, 6- oder 7-Ring bilden,
X den Rest eines Brückengliedes,
n 2, 3 oder 4,
R₃ und R₄ unabhängig voneinander je Wasserstoff oder gegebenenfalls substituiertes C₁-C₄-Alkyl,
R₅ und R₆ unabhängig voneinander je Wasserstoff oder gegebenenfalls substituiertes C₁-C₄-Alkyl oder C₁-C₄-Alkoxy und
An^{⊖} ein farbloses Anion bedeutet.

Unter Alkylresten sind erfindungsgemäss generell offenkettige, verzweigte oder cyclische Alkylgruppen zu verstehen. Cycloalkyl weist vorzugsweise 5 bis 8 C-Atome, offenkettiges Alkyl vorzugsweise 1 bis 8, insbesondere 1 bis 4 C-Atome auf.

Als unverzweigtes oder verzweigtes offenkettiges Alkyl kommen z.B. in Frage: Methyl, Ethyl, n-und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann.

Geeignete Reste dieser Art sind z.B.: Hydroxyethyl, 2-Hydroxypropyl-1, 1-Hydroxy-isopropyl, 2-Hydroxy-isopropyl, 2,3-Dihydroxypropyl-1, Methoxyethyl, Ethoxymethyl, Methoxycarbonyloxyethyl, Chlorethyl, Cyanethyl, Benzyl, 1-Phenylethyl, 2-Phenylethyl, Dimethylaminoethyl, Diethylaminoethyl, Hydroxyethylaminoethyl, Dihydroxyethylaminoethyl, Methoxycarbonylethyl oder Aminocarbonylethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substituiert sein, z.B. durch die als Substituenten der Alkylgruppen aufgeführten Reste, insbesondere durch Hydroxy oder C₁-C₄-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom, Jod oder vor allem Chlor zu verstehen.

Geeignete Alkylenreste sind z.B. Ethylen, 1,3-Propylen, 1,2-Propylen, 1,2-Butylen, 1,4-Butylen, 1,6-Hexylen, 1,8-Octylen, 1,12-Dodecylen, 1,16-Hexadecylen, 1,4-Cyclohexylen, 2-Hydroxy-1,3-propylen, 2-Chlor-1,3-Propylen oder 3-Oxa-1,5-pentylen.

Als Rest eines Alkylendiamins ist Z vor allem ein unsubstituiertes C₂-C₆-Alkylen, insbesondere ein C₃-C₆-Alkylen oder Z bildet jeweils zusammen mit den beiden benachbarten N-Atomen und R₁ und R₂ einen Piperazinring.

Falls R₁ und R₂ nicht Teile eines 5-, 6- oder 7-Ringes sind, so bedeuten sie vor allem Methyl oder Wasserstoff.

Als Rest eines aromatischen Diamins ist Z vor allem ein unsubstituierter Phenylen- oder Naphthylenrest, insbesondere ein 1,4-Phenylenrest.

X als Rest eines Brückengliedes leitet sich von solchen Verbindungen ab, die mit zwei oder mehreren Aminogruppen zu reagieren vermögen. In Frage kommen z.B. Phosgen.

Polycarbonsäurehalogenide, Polycarbonsäureester, Alkylpolyhalogenide und polyhalogenierte aromatische oder heteroaromatische Verbindungen, insbesondere dihalogenierte Xylole oder halogenierte Triazine und Pyrimidine, bei denen ein Halogenatom substituiert ist durch Reaktion mit einer Verbindung, die eine Hydroxy- oder Aminogruppe enthält. Als Brückenglieder kommen auch solche Verbindungen in Betracht, bei denen zwei oder mehrere der obengenannten Gruppen miteinander verbunden sind, z. B. zwei halogenierte Triazingruppen, die über ein aromatisches oder aliphatisches Diamin verknüpft sind.

Besonders geeignete Brückenglieder leiten sich von Phosgen, Bernsteinsäuredichlorid, Oxalsäuredichlorid, Terephthalsäuredichlorid, Ethylendibromid, Xyloldichlorid oder Dihalogentriazinen der Formeln 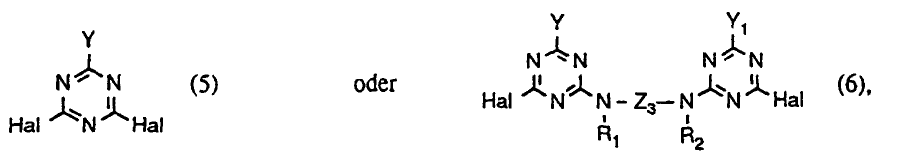 ab, worin
Hal Halogen,
Y und Y₁ unabhängig voneinander je einen Rest A der oben angegebenen Formel (4), Halogen, Hydroxy, Amino, Monoalkylamino, Dialkylamino, Anilino, welches durch C₁-C₄-Alkyl, C₁-C₄-Alkoxy oder Amino substituiert sein kann, oder den Rest eines cyclischen Amins,
Z₃ den Rest eines aliphatischen oder aromatischen Diamins und
R₁ und R₂ unabhängig voneinander je Wasserstoff oder gegebenenfalls substituiertes C₁-C₄-Alkyl bedeuten.

Besonders geeignete Brückenglieder leiten sich von Verbindungen der Formeln (5) oder (6) ab, worin Y und Y₁ unabhängig voneinander je einen Rest A der oben angegebenen Formel (4) bedeuten oder eine der folgenden Bedeutungen aufweisen: Chlor, Hydroxy, Amino, Mono-C₁-C₈-Alkylamino, Di-C₁-C₈-Alkylamino, 1-Piperidino, Morpholino oder 1-Piperazino, wobei der 1-Piperazinorest am nicht mit dem Triazinring verbundenen N-Atom durch Alkyl substituiert sein kann. Ausserdem können die Alkylgruppen durch Hydroxy, Amino, Mono-C₁-C₄-Alkylamino oder Di-C₁-C₄-Alkylamino substituiert sein.

Bei den Brückengliedern der Formeln (5) oder (6) bedeutet Hal vor allem Chlor.

Bei den Brückengliedern der Formel (6) weist Z₃ die oben für Z angegebenen Bedeutungen auf.

Vor allem bedeutet Z₃ einen C₂-C₈-Alkylen-, 1,3-Phenylen- oder 1,4-Phenylenrest oder Z₃ bildet zusammen mit den beiden benachbarten N-Atomen und R₁ und R₂ einen Piperazinring.

In den Farbstoffen der Formeln (1) ist A vorzugsweise ein Rest der Formel (4), worin R₃ und R₄ je C₁-C₄-Alkyl, insbesondere je Methyl oder Ethyl bedeuten. R₅ und R₆ bedeuten vorzugsweise Methoxy, Methyl oder vor allem Wasserstoff.

Als Anion An^{⊖} kommen sowohl anorganische wie organische Anionen in Frage; beispielsweise sind genannt: Halogenid-, wie Chlorid-, Bromid- oder Jodid-, Sulfat-, Hydrogensulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Ganz besonders bevorzugte Farbstoffe entsprechen der Formel 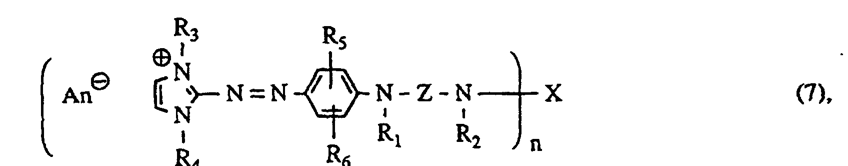 worin
Z ein Phenylen- oder Naphthylenrest, insbesondere ein 1,4-Phenylenrest, oder ein unsubstituierter C₂-C₈-Alkylenrest, insbesondere ein C₃-C₆-Alkylenrest ist, oder worin Z zusammen mit den beiden benachbarten N-Atomen und R₁ und R₂ einen Piperazinring bildet,
R₁ und R₂ unabhängig voneinander jeweils Methyl oder Wasserstoff,
R₃ und R₄ unabhängig voneinander jeweils Methyl oder Ethyl,
R₅ und R₆ unabhängig voneinander jeweils Methoxy, Methyl oder Wasserstoff,
n 2, 3 oder 4,
An^{⊖} ein farbloses Anion und
X der Rest eines Brückengliedes, ausgewählt aus der Gruppe, bestehend aus Phosgen, Bernsteinsäuredichlorid, Oxalsäuredichlorid, Terephthalsäuredichlorid, Ethylendibromid, Xyloldichlorid und Dihalogentriazinen der Formeln 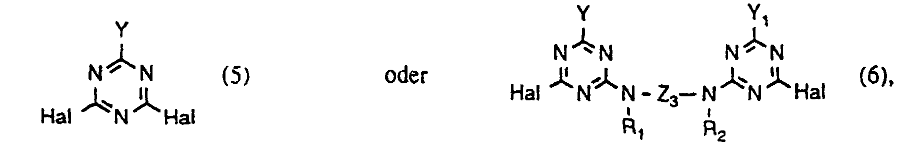
ist, worin
Hal Chlor,
Y und Y₁ unabhängig voneinander je einen Rest A der Formel 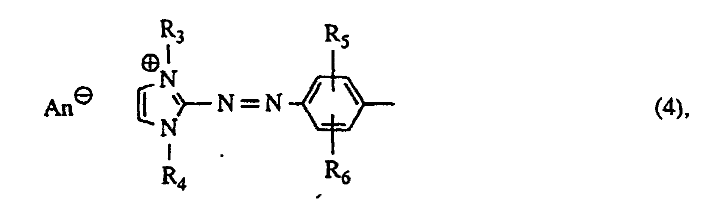
bedeuten oder Chlor, Hydroxy, Amino, Mono-C₁-C₈-Alkylamino, Di-C₁-C₈-Alkylamino, 1-Piperidino, Morpholino oder 1-Piperazino, wobei der 1-Piperazinorest am nicht mit dem Triazinring verbundenen N-Atom durch Alkyl substituiert sein kann und worin die Alkylgruppen durch Hydroxy, Amino, Mono-C₁-C₄-Alkylamino oder Di-C₁-C₄-Alkylamino substituiert sein können, und
Z₃ einen C₂-C₈-Alkylen-, 1,3-Phenylen- oder 1,4-Phenylenrest bedeutet oder Z₃ zusammen mit den beiden benachbarten N-Atomen und R_{f} und R₂ einen Piperazinring bildet.

Die Farbstoffe der Formel (1) werden z.B. erhalten, indem man eine Verbindung der Formel 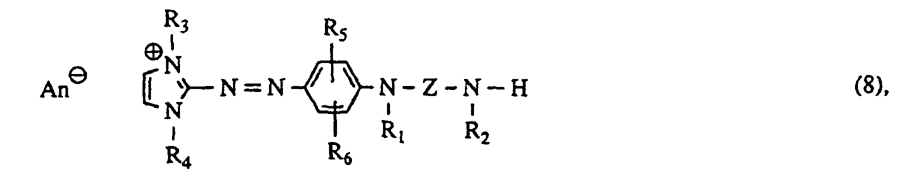 mit einem Brückenglied der Formel Hal-X-Hal umsetzt,
worin R₁, R₂, R₃, R₄, R₅, R₆, Z und An^{⊖} die unter den Formeln (1) und (4) angegebenen Bedeutungen aufweisen, und Hal Fluor, Brom, Jod oder Chlor bedeuten.

Die Verbindungen der Formel (8) sind neu und stellen einen weiteren Gegenstand der vorliegenden Erfindung dar. Man erhält sie z.B., indem man eine Verbindung der Formel 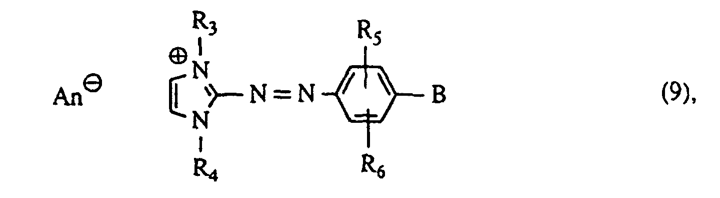 mit einem Diamin der Formel 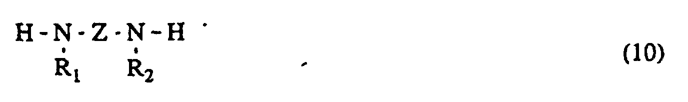 umsetzt,wobei
B Alkoxy oder Halogen bedeutet und
R₁, R₂, R₃, R₄, R₅, R₆, Z und An^{⊖} die unter den Formeln (1) und (4) angegebenen Bedeutungen aufweisen.

B bedeutet insbesondere C₁-C₄-Alkoxy, vor allem Methoxy, oder Chlor.

Die Verbindungen der Formeln (9) und (10) sind bekannt oder können auf an sich bekannte An und Weise hergestellt werden. Man erhält beispielsweise die Verbindungen der Formel (9) durch Diazotieren von 4-Alkoxyanilinen, Kuppeln mit einem Imidazol und anschliessendes Alkylieren und Quaternieren.

Die Umsetzung der Verbindungen der Formel (8) mit einem Brückenglied der Formel Hal-X-Hal erfolgt unter an und für sich für Reaktionen von Aminen mit Halogenverbindungen bekannten Bedingungen. Diese hängen hauptsächlich von der Art des Brückengliedes ab. Man arbeitet z.B. in Wasser oder einem inerten Lösungsmittel bei einer Temperatur zwischen 0 und 150 °C, gegebenenfalls unter erhöhtem Druck und/oder unter Zugabe von Alkali.

Verwendet man als Brückenglied 2,4,6-Trichlor-1,3,5-triazin, so hängen die Reaktionsbedingungen davon ab, ob nur 2 oder alle drei Chloratome reagieren sollen. Im ersten Falle arbeitet man z.B. bei einer Temperatur zwischen 25 und 50 °C und einem pH-Wert von 6, wobei man anschliessend das dritte Chloratom mit einem weiteren, vorzugsweise andersartigen Diamin zur Reaktion bringen kann. Dies geschieht z.B bei etwa 80 bis 100 °C, vorzugsweise bei ca. 85 bis 95 °C, und einem pH-Wert von etwa 7 bis 9. Falls man dagegen alle drei Chloratome durch das gleiche Diamin ersetzen will, so kann man z.B. bei einem pH-Wert von etwa 7 bis 9 arbeiten und sofort auf ca. 80 bis 100 °C aufheizen.

Bei der Umsetzung einer Verbindung der Formel (9) mit einem Diamin der Formel (10) zu einer Verbindung der Formel (8) arbeitet man z.B. bei einer Temperatur zwischen ca. 40 und 140 °C, vorzugsweise zwischen 50 und 120 °C, gegebenenfalls unter Druck und/oder in Inertgasatmosphäre, und in einem inerten Lösungsmittel, z.B. in Wasser oder aliphatischen Alkoholen, z.B. C₁-C₈-Alkoholen, wie Methanol, Ethanol oder vor allem Isopropanol, insbesondere jedoch in aprotischen polaren Lösungsmitteln, wie Dimethylformamid oder Dimethylsulfoxid. Bei unter Reaktionsbedingungen flüssigen Diaminen kann gegebenenfalls auf ein Lösungsmittel verzichtet werden.

Falls bei der eingesetzten Verbindung der Formel (10) Z ein aromatisches Amin ist, so erhält man fast ausschliesslich Umsetzungsprodukte der Formel (8), d.h. solche aus einem Molekül der Verbindung der Formel (9) mit einem Molekül der Verbindung der Formel (10). Ist Z dagegen der Rest eines aliphatischen Amins, so werden ausserdem Reaktionsprodukte der oben angegebenen Formel (3) gebildet, d.h. Umsetzungsprodukte aus zwei Molekülen der Verbindung der Formel (9) mit einem Molekül der Verbindung der Formel (10).

Durch geeignete Wahl der Reaktionsbedingungen kann man die Reaktion so steuern, dass zum überwiegenden Teil oder sogar nahezu ausschliesslich das jeweils gewünschte Reaktionsprodukt der Formel (8) oder der Formel (3) gebildet wird. Die entsprechenden Arbeitstechniken sind im Prinzip bekannt.

Die Verbindungen der Formel (8) stellen brauchbare Zwischenprodukte zur Herstellung von Farbstoffen der Formel (1) dar. Ausserdem eignen sie sich selbst bereits zum Färben von Materialien, die üblicherweise mit kationischen Farbstoffen gefärbt werden, wie z.B. Polyacrylnitril, Holzschliff und Haare, insbesondere lebende menschliche Haare. Man erhält Färbungen in roten oder violetten Farbtönen mit guten Echtheiten.

Solche Verbindungen der Formel (8), worin R₂ Wasserstoff bedeutet, lassen sich ausserdem diazotieren und mit einer Kupplungskomponente KK der oben angegebenen Bedeutung kuppeln. wobei man einen Farbstoff der Formel (2) erhält.

Die Diazotierung der Verbindungen der Formel (8), worin R₂ Wasserstoff bedeutet, erfolgt in an sich bekannter Weise, z.B. mit Natriumnitrit in saurem, z.B. salzsaurem oder schwefelsaurem. wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (8), worin R₂ Wasserstoff bedeutet, auf eine Kupplungskomponente KK erfolgt ebenfalls in bekannter Weise, beispielsweise in schwach saurem bis schwach alkalischem, wässrigem oder wässrig-organischem Medium, vorteilhaft bei Temperaturen von -10 bis 30 °C, insbesondere unter 10°C. Diazotierung und Kupplung können beispielsweise im Eintopfverfahren, also im gleichen Reaktionsmedium durchgeführt werden.

Die erfindungsgemässen Farbstoffe der Formel (1) eignen sich zum Färben von Polyacrylnitrilmaterialien und Leder, insbesondere jedoch zum Färben von Papier, da sie eine hohe Substantivität für dieses Substrat aufweisen. Die Farbstoffe, bei denen Z den Rest eines aliphatischen Amins bedeutet, ergeben Färbungen in roten Farbtönen, die Farbstoffe, bei denen Z den Rest eines aromatischen Amins bedeutet, ergeben Färbungen in violetten Farbtönen. Die erhaltenen Färbungen zeichnen sich durch gute Echtheiten aus. Die Abwässer sind in den meisten Fällen völlig farblos.

Die Farbstoffe der Formel (1) können sowohl in Mischungen untereinander als auch in Mischungen mit anderen kationischen Farbstoffen eingesetzt werden. Besonders bevorzugte Farbstoffmischungen sind solche, welche einen violetten Farbstoff der Formel (1) sowie einen kationischen Kupferphthalocyaninfarbstoff enthalten. Diese Farbstoffmischungen stellen einen weiteren Gegenstand der vorliegenden Erfindung dar. Man erhält mit solchen Mischungen auf Papier Färbungen in sehr schönen neutralen Blautönen. Als Kupferphthalocyaninfarbstoffe sind die aus der Literatur bekannten und zum Färben von Papier brauchbaren Farbstoffe geeignet, insbesondere die in EP-A-0184991, DE-A-3111199 und EP-A-0174586 beschriebenen Farbstoffe.

Die Farbstoffe der Formel (1) können als feste oder flüssige Handelsform formuliert und zum Färben von Papier eingesetzt werden.

Als Pulver oder Granulat werden die Farbstoffe insbesondere bei der diskontinuierlichen Massefärbung verwendet, wobei der Farbstoff chargenweise im Pulper. Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (1) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (1), welche dadurch gekennzeichnet sind, dass sie mindestens 5, beispielsweise 8 bis 30 Gewichtsprozent Farbstoff, bezogen auf das Gesamtgewicht der Lösung, enthalten.

Konzentrierte wässrige Lösungen von Farbstoffen der Formel (1) können z.B. hergestellt werden, indem man die bei der Herstellung des Farbstoffes anfallende Farbstoftsuspension filtriert, gegebenenfalls entsalzt, z.B. durch ein Membrantrennverfahren, anschliessend mit einer Säure, z.B. Ameisensäure, Essigsäure oder Milchsäure, und durch Zusatz von Hilfsmitteln, wie Harnstoff, ∈-Caprolactam oder Polyethylenglykol stabilisiert.

Die so hergestellten Farbstofflösungen enthalten vorzugsweise auf 100 Teile Farbstoff 400 bis 900 Teile Wasser, 0 bis 400 Teile einer organischen Carbonsäure, z.B. Ameisensäure, Essigsäure, Propionsäure oder Milchsäure und 0 bis 200 Teile weitere Zusätze, wie Harnstoff, ∈-Caprolactam oder Polyethylenglykol.

Die erfindungsgemässen wässrigen Konzentrate, die bei Lagerungstemperaturen bis zu -5°C stabil sind, eignen sich zum Färben von Papier, auf welchem sie attraktive rote bis violette Farbtöne ergeben.

Die Farbstoffe der Formel (1) können ausserdem auch zum Färben von Textilmaterialien aus Cellulose, z.B. Baumwolle, sowie zum Färben von Leder und Glasfasern eingesetzt werden.

In den nachfolgenden Beispielen beziehen sich Teile und Prozente auf das Gewicht und die Temperaturen sind in Celsiusgraden angegeben.

Beispiel 1:26,7 Teile der Verbindung der Formel 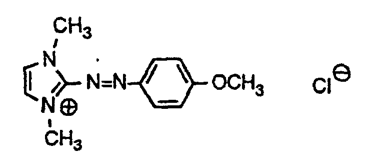 werden mit 13 Teilen p-Phenylendiamin in 50 Teilen Isopropanol verrührt. Unter Stickstoff werden bei einer Badtemperatur von 100° C 24 Teile Isopropanol abdestilliert. Die Badtemperatur wird auf 90° C abgesenkt und die Reaktionsmasse 16 Stunden bei dieser Temperatur gerührt. Danach wird das Heizbad entfernt und das vorher abdestillierte Isopropanol wieder zugetropft. Man rührt, bis Zimmertemperatur erreicht ist, filtriert, wäscht gut mit Isopropanol und trocknet. Man erhält 34 Teile eines schwarzen Kristallpulvers, welches zu 92 Gew. % aus der Verbindung der Formel 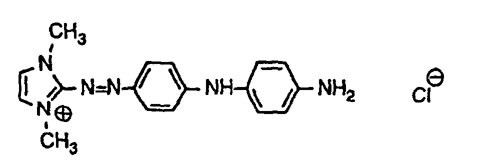 besteht. Durch Umkristallisation aus Ethanol kann man sie in reiner Form erhalten. Sie färbt Textilmaterial aus Polyacrylnitril, holzschliffhaltiges Papier und Haare in violetten Farbtönen.

Beispiel 2:62,2 Teile der Verbindung der Formel 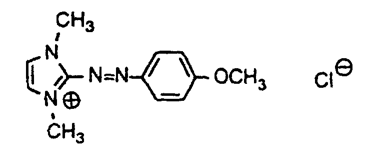 als salzhaltiges Rohprodukt mit einem Gehalt von 85,8 Gew. % werden in 43 Teilen Dimethylformamid mit 21,6 Teilen p-Phenylendiamin auf 115° C erwärmt. Nach 4,5 Stunden lässt man die Reaktionsmasse unter Rühren auf 100° C abkühlen, entfernt das Heizbad und tropft innerhalb von 60 Minuten 140 Teile Methyl-isobutylketon zu. Nach dem Erkalten wird der schön kristalline Niederschlag abgenutscht und mit Methyl-isobutylketon gewaschen. Nach dem Trocknen erhält man 69,6 Teile dunkles Kristallpulver, welches zu 80 % aus der gleichen violetten Verbindung besteht, die gemäss Beispiel 1 erhalten wird.

Beispiel 3: 11,2 Teile der gemäss Beispiel 1 erhaltenen Verbindung werden bei Raumtemperatur in 80 Teilen Wasser mit 2,77 Teilen Cyanurchlorid verrührt, wobei der pH-Wert durch Zugabe von 30 %iger Natronlauge konstant bei 6 gehalten wird. Nach 2 Stunden wird die Temperatur auf 35° C und nach weiteren 3,5 Stunden auf 45° C erhöht. Nach 6 Stunden ist die Reaktion beendet Man fügt 8 Teile Kochsalz hinzu und filtriert bei 50° C. Der Presskuchen wird mit 5 %iger Kochsalzlösung gewaschen und getrocknet. Man erhält 15 Teile eines dunklen, salzhaltigen Pulvers, das hauptsächlich aus dem violetten Farbstoff der Formel 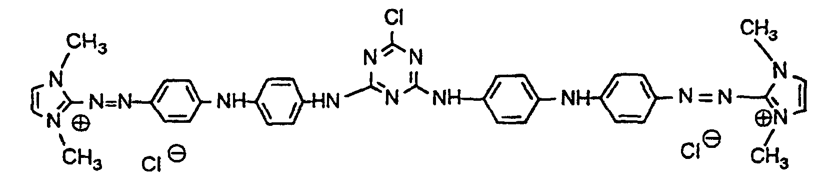 besteht. Der Farbstoff färbt gebleichte Cellulose in klaren Violettönen und zeigt ein ausgezeichnetes Ziehvermögen auf diesem Material.

Beispiel 4:Man verrührt 40 Teile der Ausgangsverbindung aus Beispiel 1 mit 20 Teilen Piperazin in 80 Teilen Isopropanol bei 60° C während 2 Stunden, lässt abkühlen und filtriert das in geringer Menge ausgefallene Dikondensationsprodukt ab. Die Mutterlauge wird langsam mit 380 Teilen tert.-Butyl-methylether versetzt und das ausgefällte Produkt filtriert. Der Presskuchen wird erneut in 80 Teilen Isopropanol gelöst und wieder mit tert.-Butyl-methylether ausgefällt. Nach dem Trocknen erhält man 46 Teile eines violetten Kristallpulvers der Formel 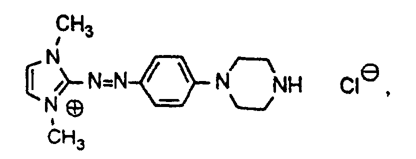 das sich zum Färben von Textilmaterial aus Polyacrylnitril, holzschliffhaltigem Papier und Haaren in violetten Farbtönen eignet.

Beispiel 5:Man verrührt 38 Teile der Ausgangsverbindung aus Beispiel 1 mit 70 Teilen geschmolzenem Hexamethylendiamin bei 85° C während 2 Stunden, lässt danach auf 50° C abkühlen und versetzt langsam mit 190 Teilen tert.-Butyl-methylether. Das ausgefallene Produkt wird abgenutscht und der Rückstand in 70 Teilen Isopropanol heiss gelöst und wieder abgekühlt. Man versetzt dann wiederum mit 190 Teilen tert.-Butyl-methylether, filtriert den ausgefallenen Niederschlag ab und trocknet. Man erhält 43 Teile eines violetten Kristallpulvers der Formel

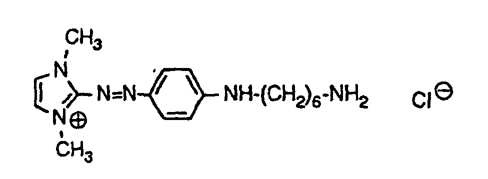

Beispiel 6:Man verrührt 40 Teile der Ausgangsverbindung aus Beispiel 1 mit 75 Teilen 1,3-Diaminopropan bei 60° C während 1 Stunde, lässt abkühlen und versetzt mit 380 Teilen tert.-Butyl-methylether. Das ausgefallene Produkt wird abgenutscht und der Rückstand in 100 Teilen Isopropanol heiss gelöst und wieder abgekühlt. Man versetzt dann wiederum mit 380 Teilen tert.-Butyl-methylether, filtriert den ausgefallenen Niederschlag ab und trocknet. Man erhält 41 Teile eines roten Kristallpulvers der Formel

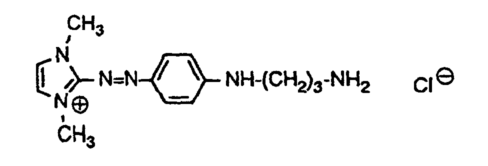

Beispiel 7: 11,2 Teile der gemäss Beispiel 1 erhaltenen Verbindung werden in 80 Teilen Wasser mit 2,77 Teilen Cyanurchlorid bei Raumtemperatur verrührt, wobei der pH-Wert durch Zugabe von Natronlauge konstant bei 6 gehalten wird. Nach 2 Stunden wird die Temperatur langsam auf 35° C und nach einer weiteren Stunde auf 50° C erhöht. Nach ca. 5,5 Stunden wird keine Natronlauge mehr verbraucht. Daraufhin wird die Reaktionsmasse kurz auf 85° C aufgeheizt und nach dem Abkühlen mit 5 Teilen einer 40 %igen wässrigen Dimethylaminlösung versetzt. Das Gemisch wird im Autoklaven 6 Stunden lang bei 90 bis 95° C verrührt (Druck ca. 2 bar) und nach dem Abkühlen filtriert. Der Presskuchen wird in 200 Teilen Wasser dispergiert und während 10 Stunden in einem Dialyseschlauch (Spectra/ Por® Nr. 1) entsalzt. Mit 34 Teilen Essigsäure lässt sich die resultierende Farbstoffsuspension in Lösung bringen. Nach Einengen am Rotationsverdampfer auf 130 Teile erhält man eine stabile, intensiv gefärbte Lösung des Farbstoffes der Formel

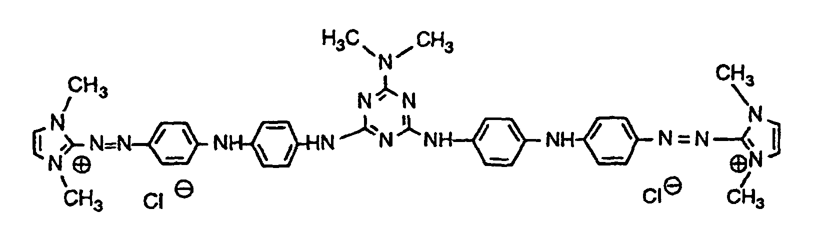

Der Farbstoff färbt gebleichte Cellulose in blaustichigen Violettönen mit ausgezeichneten Echtheiten. Besonders erwähnenswert ist das völlig farblose Abwasser nach der Färbung.

Beispiel 8: 13,1 Teile der gemäss Beispiel 2 erhaltenen Verbindung werden in 80 Teilen Wasser bei Raumtemperatur verrührt. Nach dem Eintragen von 2,77 Teilen Cyanurchlorid wird der pH-Wert durch Zugabe von 4 M Natronlauge konstant bei 6 gehalten. Nach 2 Stunden ist die Hälfte der theoretisch nötigen Natronlauge verbraucht und die Reaktion wird langsam. Man erwärmt deshalb zunächst auf 37° C und nach weiteren 2,5 Stunden auf 47° C. Nach insgesamt 6 Stunden ist die Kondensation praktisch beendet. Daraufhin wird die Reaktionsmasse auf 85° C aufgeheizt und es werden innerhalb 0,5 Stunden 1,44 Teile Morpholin, gelöst in 10 Teilen Wasser, zugetropft, wobei man den pH-Wert durch Zugabe von Natronlauge konstant bei 8 hält. Schliesslich erhöht man die Temperatur noch auf 92° C und rührt so lange, bis keine Natronlauge mehr verbraucht wird (ca. 2,5 Stunden). Nach dem Abkühlen unter Rühren wird abgenutscht und der Presskuchen mit 2 %iger Kochsalzlösung gewaschen. Nach dem Trocknen erhält man 12,5 Teile eines dunklen Pulvers, das zu über 90 % aus dem Farbstoff der Formel 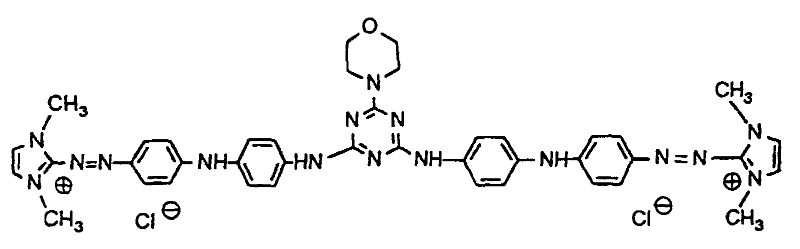 besteht und sich hervorragend zum Färben von gebleichter Cellulose in blaustichigen violetten Tönen mit ausgezeichneten Echtheiten eignet.

Beispiel 9 bis 18:Arbeitet man wie in den Beispielen 7 oder 8 beschrieben, setzt jedoch anstelle von Dimethylamin und Morpholin äquivalente Mengen der in der folgenden Tabelle aufgeführten Amine ein, so erhält man Farbstoffe, die sich hervorragend zum Färben von gebleichter Cellulose in violetten Tönen eignen, die mehr oder weniger rotstichig sind.

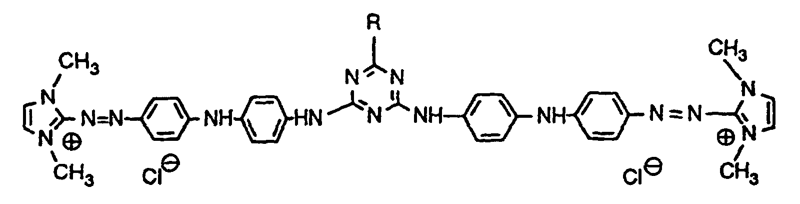

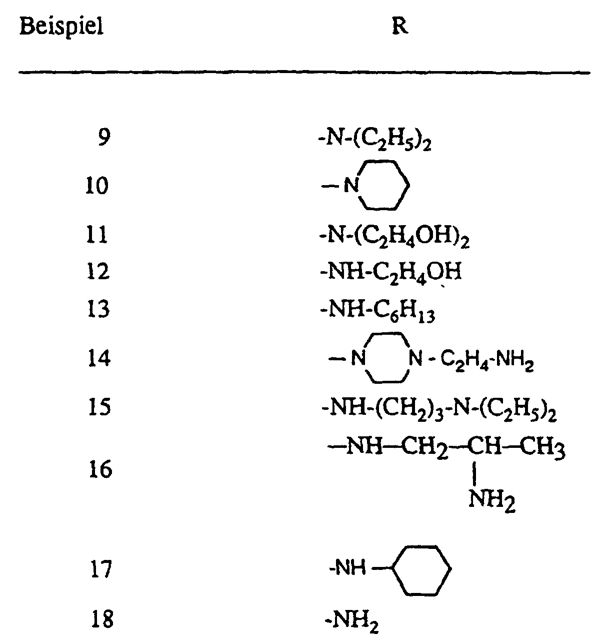

Beispiel 19: 15 Teile der gemäss Beispiel 3 erhaltenen Verbindung werden in 80 Teilen Wasser verrührt. Man gibt 0,64 Teile Piperazin zu, worauf der pH-Wert von 6,8 auf 10,8 steigt. Man erwärmt zunächst auf 75° C und hält den pH-Wert konstant bei 9,0 durch Zugabe von 4 M NaOH. Nach 6 Stunden erhöht man die Temperatur auf 95° C, hält diese Temperatur während 1,5 Stunden bei und lässt dann unter Rühren erkalten. Die Reaktionsmasse wird anschliessend wie im Beispiel 7 beschrieben so lange dialysiert, bis keine farbigen Verbindungen mehr austreten (ca. 70 Stunden). Dann wird der Inhalt des Dialyseschlauches auf 310 Teile eingeengt und heiss mit 45 Teilen Essigsäure versetzt. Nach Klärfiltration durch eine Glasfritte erhält man eine rückstandsfreie Farbstofflösung, die 3,4 % des Farbstoffes der Formel 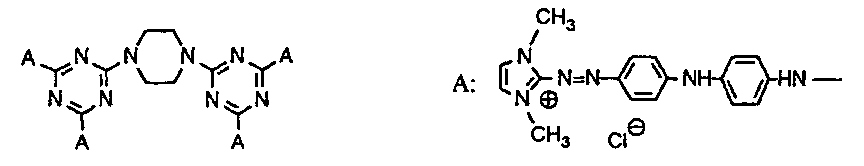 enthält. Der Farbstoff hat ein hervorragendes Ziehvermögen auf gebleichter Cellulose und ergibt violette Färbungen mit ausgezeichneten Nassechtheiten. Die Abwässer sind selbst bei tiefen Färbungen farblos.

Beispiel 20:2,87 Teile der gemäss Beispiel 3 erhaltenen Verbindung werden in 80 Teilen Wasser mit 0,2 Teilen 1,6-Diaminohexan auf 95° C erhitzt, wobei der pH-Wert konstant bei 8,5 gehalten wird durch Zugabe von 4 M NaOH. Nach ca. 1 Stunde ist die Reaktion beendet. Man lässt dann unter Rühren erkalten, filtriert und wäscht mit wenig Wasser nach. Nach dem Trocknen erhält man 2,54 Teile einer dunklen Verbindung der Formel

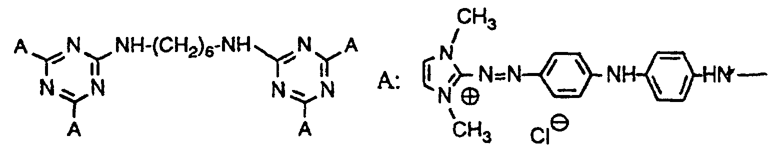

Der Farbstoff hat ein aussergewöhnlich gutes Ziehvermögen auf gebleichter Cellulose unter allen Färbebedingungen und ergibt violette Färbungen mit ausgezeichneten Nassechtheiten. Die Abwässer sind selbst bei tiefen Färbungen farblos.

Beispiel 21: 2 Teile Natriumbicarbonat werden in 30 Teilen Wasser gelöst. Die Lösung wird auf eine Temperatur unterhalb 5° C abgekühlt, mit 1,84 Teilen Cyanurchlorid versetzt und noch 2 Stunden bei der gleichen Temperatur gerührt Dann lässt man die Temperatur langsam auf Raumtemperatur ansteigen und rührt weiter über Nacht. Zu der entstandenen klaren Lösung gibt man 7,4 Teile der gemäss Beispiel 1 hergestellten Verbindung und erhöht die Temperatur innerhalb von 2 Stunden auf 75° C, wobei man den pH-Wert durch Zugabe von 4 M Natronlauge konstant bei 7 hält. Wenn keine Natronlauge mehr verbraucht wird, lässt man unter Rühren abkühlen, filtriert und wäscht mit Wasser. Der feuchte Rückstand wird mit 120 Teilen einer Mischung aus Methanol und Ethanol heiss gelöst und nach dem Erkalten erneut filtriert und gewaschen.Nach dem Trocknen erhält man 6,8 Teile eines dunklen Pulvers der Formel

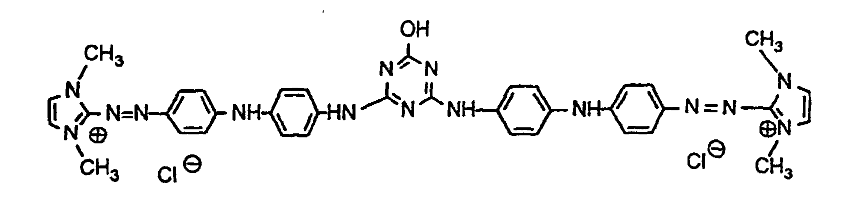

Der Farbstoff eignet sich gut zum Färben von gebleichter Cellulose in violetten Farbtönen.

Beispiel 22:2,9 Teile der gemäss Beispiel 3 hergestellten Verbindung mit einem Gehalt von 83 % werden in 60 Teilen Wasser mit 1,1 Teilen der gemäss Beispiel 1 hergestellten Verbindung 5 Stunden lang auf 95° C erhitzt, wobei der pH-Wert durch Zugabe von Natronlauge konstant bei 7 gehalten wird. Man lässt dann unter Rühren erkalten, versetzt mit 5 Teilen NaCl und filtriert nach einer halben Stunde. Der Rückstand wird in 150 Teilen heissem Wasser angeschlämmt, nach dem Erkalten mit HCl auf pH 3 gestellt und erneut mit 3 Teilen NaCl ausgesalzen. Nach Filtration und Trocknung erhält man 3,9 Teile eines dunklen Pulvers, dessen Hauptbestandteil der Farbstoff der Formel 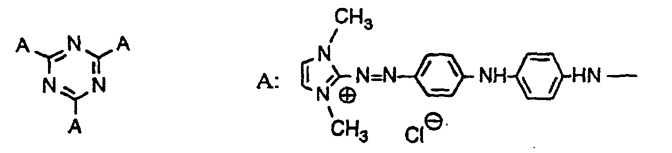 darstellt und das sich ausgezeichnet zum Färben von gebleichter Cellulose in blaustichig violetten Tönen eignet.

Beispiel 23: 0.92 Teile Cyanurchlorid werden in 100 Teilen Wasser bei einer Temperatur zwischen 0 und 5° C mit 0,53 Teilen Diethanolamin verrührt. Man gibt zur Beschleunigung der Reaktion 8 Teile Aceton zu und hält den pH durch Zutropfen von 1 M NaOH konstant bei 6. Nach 1,5 Stunden entfernt man das Eisbad, fügt nach einer weiteren Stunde zu der weissen Suspension 1,6 Teile der gemäss Beispiel 4 erhaltenen Verbindung hinzu und erhöht langsam die Temperatur auf 40°C, wobei man den pH bei 7 hält. Nach einer weiteren Stunde werden nochmals 1,6 Teile der gemäss Beispiel 4 erhaltenen Verbindung hinzugegeben und die Temperatur auf 85° C erhöht. Dabei destilliert das zugesetzte Aceton ab. Nach 1,5 Stunden ist die Reaktion beendet, man kühlt auf 50° C ab, fügt 2,5 Teile NaCl hinzu und filtriert. Nach dem Trocknen erhält man 4,55 Teile eines salzhaltigen Farbstoffpulvers der Formel

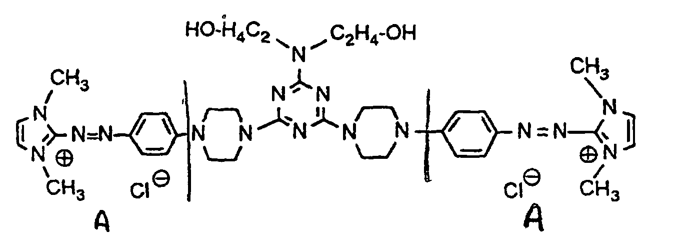

Es eignet sich hervorragend zum Färben von gebleichter Cellulose in blaustichig roten Tönen. Das Abwasser der Färbung ist völlig farblos.

Beispiel 24:In 500 Teilen Wasser werden 7,1 Teile der gemäss Beispiel 5 erhaltenen Verbindung zusammen mit 3,68 Teilen Cyanurchlorid bei konstantem pH 8 bei Raumtemperatur verrührt. Nach 0,75 Stunden gibt man nochmals 7,1 Teile der gemäss Beispiel 5 erhaltenen Verbindung zu. Nach ca. 2 Stunden wird die Temperatur allmählich auf 38° C erhöht. Nach weiteren 2 Stunden lässt man unter Rühren erkalten und versetzt dann mit 22 Teilen Kochsalz. Man rührt eine Stunde, filtriert, wäscht mit NaCl-Lösung und trocknet. Es resultieren 27 Teile eines stark salzhaltigen Pulvers, das zu 60 Gew.% aus dem roten Farbstoff der Formel 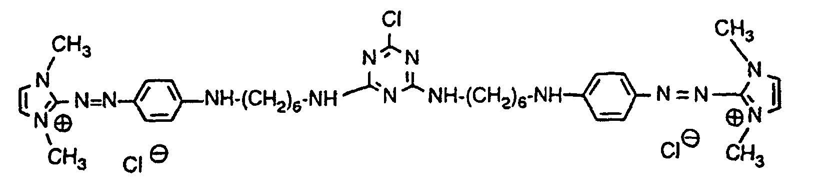 besteht.

Zu 2,7 Teilen dieses Pulvers in 80 Teilen Wasser werden 0,8 Teile einer 10 %igen wässrigen Piperazinlösung gegeben und 6 Stunden bei einer Temperatur von 95° C verrührt, wobei der pH durch Zugabe von 1 M NaOH konstant bei 8,5 gehalten wird. Man lässt unter Rühren erkalten und dekantiert die überstehende Lösung von einem harzigen Rückstand. Dieser wird in 50 Teilen Methanol heiss gelöst. Dann werden 100 Teile Isopropanol zugegeben, das Methanol abdestilliert und die verbleibende Lösung klärfiltriert. Die isopropanolische Mutterlauge wird scharf zur Trockne eingedampft. Man erhält 1,4 Teile eines roten Farbstoffes der Formel

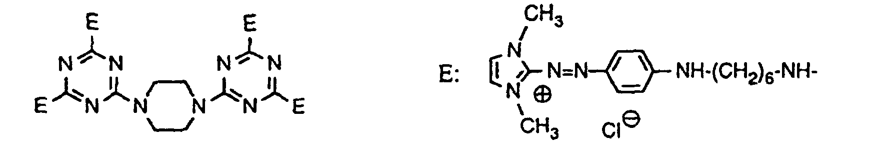

Dieser Farbstoff eignet sich hervorragend für das Färben von gebleichter Cellulose in brillanten roten Tönen mit ausgezeichneten Echtheiten.

Beispiel 25:14,4 Teile der gemäss Beispiel 4 erhaltenen Verbindung werden in 400 Teilen Wasser mit 2,77 Teilen Cyanurchlorid bei 0 bis 5° C verrührt. Man hält den pH durch Zugabe von 4 M NaOH zwischen 7 und 8 und erhöht die Temperatur innert 5 Stunden auf 95° C. Nach weiteren 1,5 Stunden ist die Reaktion beendet. Man fügt 30 Teile Kochsalz hinzu, lässt abkühlen und filtriert. Der Rückstand wird aus 250 Teilen Wasser umkristallisiert. Nach dem Trocknen erhält man 14 Teile violettes Kristallpulver der Formel

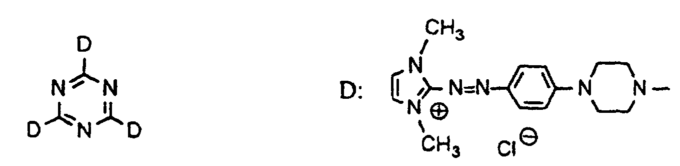

Der Farbstoff färbt gebleichte Cellulose in blaustichig roten Tönen. Die Abwässer sind selbst bei tiefen Färbungen völlig farblos.

Beispiel 26:16,1 Teile der gemäss Beispiel 6 erhaltenen Verbindung werden in 250 Teilen Wasser und 8 Teilen Aceton verrührt. Bei einer Temperatur zwischen 5 und 10° C gibt man 4,6 Teile Cyanurchlorid zu und hält den pH durch Zugabe von 4 M NaOH zwischen 7 und 8. Dann erhöht man die Temperatur innert 3 Stunden auf 45° C. Nach weiteren 1,5 Stunden bei dieser Temperatur ist die Reaktion beendet. Man engt das gelartige Reaktionsgemisch auf etwa 20 % ein, fügt heiss erst 50 Teile Methanol und dann. 100 Teile Isopropanol zu und fällt durch Hinzufügen von 320 Teilen tert.-Butyl-methylether. Der ausgefällte Farbstoff wird filtriert und getrocknet. Man erhält 18,6 Teile der Verbindung der Formel

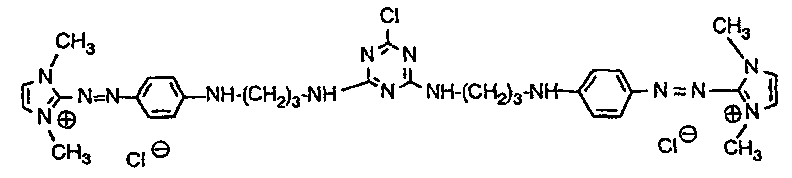

3 Teile dieser Verbindung werden in 80 Teilen Wasser mit 0,23 Teilen 1,6-Hexamethylendiamin auf 90 bis 95° C erhitzt, wobei der pH durch Zugabe von 1 M NaOH zwischen 8,5 und 9 gehalten wird. Nach 7 Stunden engt man das Reaktionsgemisch zur Trockne ein, nimmt den Rückstand heiss mit 50 Teilen Methanol auf, filtriert von ungelösten Salzen ab und dampft wieder zur Trockne ein. Man erhält 3,3 Teile des Farbstoffes der Formel

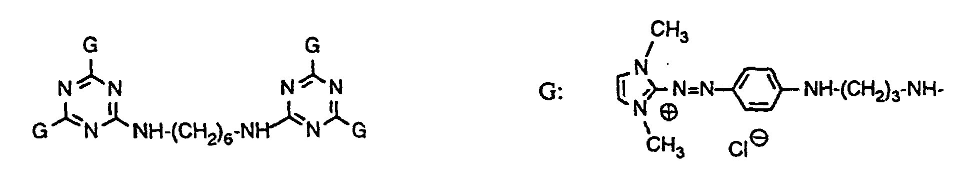

Er färbt gebleichte Cellulose in brillanten roten Nuancen mit ausgezeichneten Echtheiten.

Beispiel 27: 18,4 Teile Cyanurchlorid werden bei 0° C in 80 Teilen Aceton gelöst. Dazu tropft man innert 1 Stunde eine Lösung von 9,3 Teilen frisch destilliertem Anilin in 40 Teilen Aceton und hält dabei die Temperatur zwischen 0 und 10° C. Man entfernt das Eisbad und rührt 2 Stunden bei Raumtemperatur nach. Es entsteht eine klare Lösung. Man tropft 300 Teile Wasser zu, wobei sich ein Öl abscheidet. Durch Zutropfen von 4 M NaOH erhöht man den pH-Wert von 0,5 auf 4,5. Dabei scheidet sich 2,4-Dichlor-6-anilino-1,3,5-triazin als weisse Suspension ab. Man filtriert, wäscht mit Wasser und erhält nach dem Trocknen 23,1 Teile weisses Pulver.

4,8 Teile dieses Pulvers werden in 100 Teilen Wasser mit 7 Teilen der gemäss Beispiel 5 hergestellten Verbindung bei 60° C 5 Stunden lang verrührt, wobei der pH konstant bei 7 gehalten wird. Man lässt unter Rühren erkalten, filtriert, trocknet und erhält 10 Teile der Verbindung der Formel

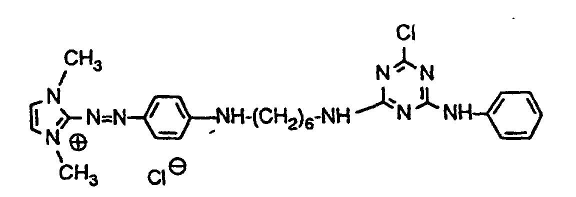

2,45 Teile dieser Verbindung werden mit 1,55 Teilen der gemäss Beispiel 5 hergestellten Verbindung in 80 Teilen Wasser 5,5 Stunden auf 90 bis 95° C erhitzt, wobei der pH konstant bei 8 gehalten wird. Nach dem Erkalten wird vom öligen Produkt abdekantiert, das Öl getrocknet und dann in 40 Teilen Ethanol aufgenommen und von ungelösten Salzen klärfiltriert. Man erhält 35 Teile einer 10,8 %igen Lösung des Farbstoffes der Formel

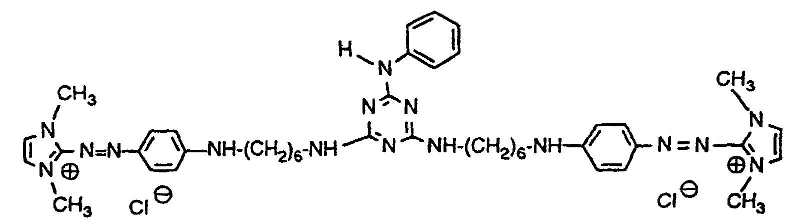

Der Farbstoff färbt gebleichte Cellulose in brillanten Rottönen mit sehr guten Echtheiten.

Beispiel 28: Auf analoge Art wie im Beispiel 6 beschrieben stellt man die Verbindung der Formel 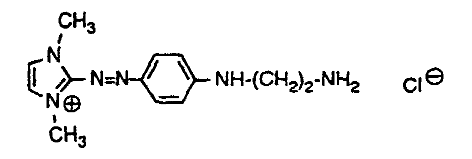 her. 5,9 Teile dieser Verbindung werden in 80 Teilen Wasser gelöst und bei einer Temperatur von 5° C innert 30 Minuten mit einer Lösung von 2 Teilen Terephthaloyldichlorid in 16 Teilen Aceton versetzt. Mit 4 M NaOH hält man den pH dabei auf 11,5. Man lässt die Temperatur dann auf Raumtemperatur ansteigen und rührt weitere 4 Stunden. Dann stellt man mit ca. 0,7 Teilen konz. HCl den pH auf 1,5, filtriert, wäscht mit Wasser und trocknet. Man erhält 6,7 Teile des Farbstoffes der Formel 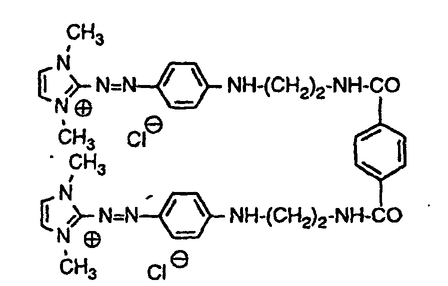 der sich gut zum Färben von Cellulose in roten Nuancen eignet

Beispiel 29: 3,2 Teile des Produktes aus Beispiel 4 werden in 100 Teilen Wasser gelöst und bei 5° C mit 0,92 Teilen fein gemahlenem Cyanurchlorid versetzt. Nach einer Stunde wird das Eisbad entfernt und die Reaktionsmasse innerhalb von 3 Stunden auf 50° C erwärmt. Der pH wird durch Zugabe von IM Natronlauge auf 7 gehalten. Nach ca. 4 Stunden ist im Dünnschichtchromatogramm kein Ausgangsprodukt mehr nachweisbar. Man gibt nun 1,7 Teile des Produktes aus Beispiel 1 hinzu, heizt auf 95° C auf und hält 10 Stunden bei dieser Temperatur und pH 8. Die Reaktionslösung wird anschliessend wie im Beispiel 7 beschrieben dialysiert, dann auf 130 Teile eingeengt und durch Zugabe von 10 Teilen Eisessig praktisch vollständig in Lösung gebracht. Sie enthält den Farbstoff der Formel 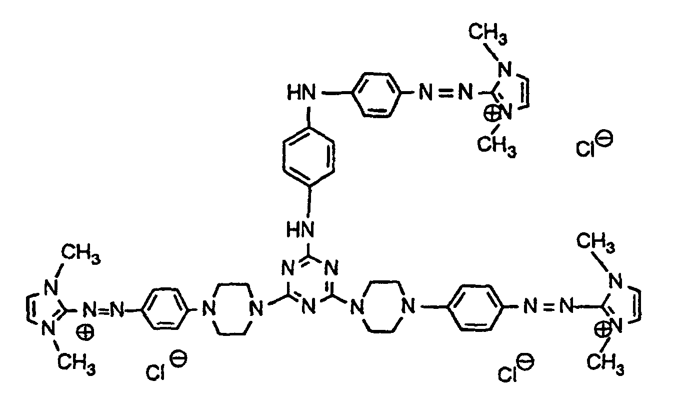 und färbt gebleichte Cellulose in einem rot-violetten Ton mit guten Echtheiten.

Beispiel 30:4 Teile des Produktes gemäss Beispiel 3 werden in 100 Teilen Wasser mit 1,6 Teilen des Produktes aus Beispiel 4 3 Stunden lang auf 85° C erhitzt, wobei der pH durch Zugabe von Natronlauge konstant bei 7,5 gehalten wird. Man lässt unter Rühren erkalten, entsalzt durch Dialyse wie im Beispiel 7 beschrieben und dampft zur Trockne ein. Man erhält 4,3 Teile des Farbstoffes der Formel 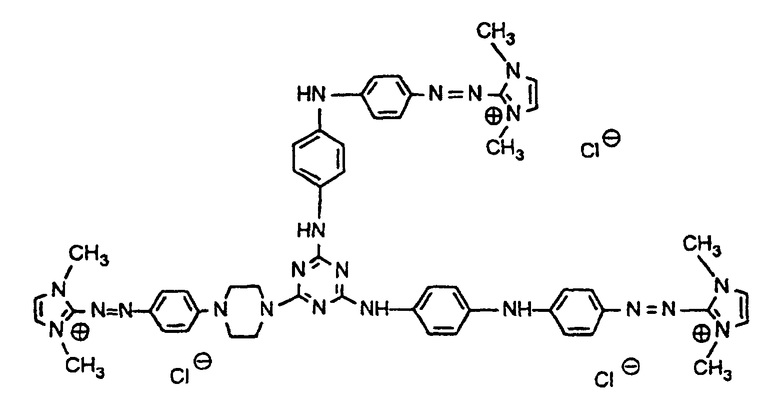 welcher sich ausgezeichnet zum Färben von gebleichtem Zellstoff eignet. Die Nuance der Färbungen liegt etwa in der Mitte zwischen dem stark rotstichigen Violett aus Beispiel 33 und dem blaustichigen Violett aus Beispiel 7.

Beispiel 31:0,92 Teile Cyanurchlorid werden in 100 Teilen Wasser von < 5° C suspendiert. Dann gibt man eine Lösung von 0,53 Teilen Diethanolamin in 8 Teilen Aceton zu und hält den pH durch Zugabe von Natronlauge bei 6. Nach 2 Stunden wird die kühlung entfernt, der pH auf 7 gestellt und weitere 2 Stunden bei 20° C gerührt. Man gibt nun 1,7 Teile des Produktes aus Beispiel 1 zu und erwärmt langsam auf 40° C. Wenn im Dünnschichtchromatogramm kein farbiges Edukt mehr zu sehen ist, werden noch 1,6 Teile des Produktes aus Beispiel 4 zugegeben und das Ganze 4 Stunden lang bei 80° C und pH 8,5 verrührt. Man lässt unter Rühren erkalten, entsalzt durch Dialyse wie im Beispiel 7 beschrieben, dampft auf 90 Teile ein und bringt mit 10 Teilen Eisessig in Lösung. Der resultierende Farbstoff hat die Formel

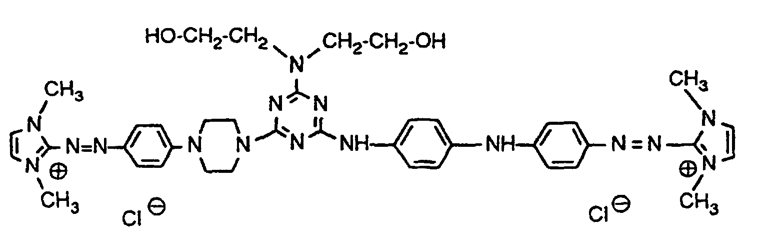

Er eignet sich ebenfalls ausgezeichnet zum Färben von gebleichter Cellulose. Die Nuance ist etwas röter als das Violett aus Beispiel 34.

Beispiel 32:Man vermischt 50 Teile chemisch gebleichte Buche-Sulfitzellulose mit 50 Teilen gebleichter Fichtezellulose RKN 15 (Mahlgrad 22° SR) und 0,2 Teilen des Farbstoffes gemäss Beispiel 7 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist intensiv violett gefärbt. Das Abwasser ist völlig farblos. Der Ausziehgrad erreicht praktisch 100 %. Die Nassechtheiten sind ausgezeichnet.

Beispiel 33:Es wird eine Papierbahn aus gebleichter Buche-Sulfitzellulose (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 8 unter starker Turbulenz dem Dünnstoff kontinuierlich zudosiert (0,3 %ige Färbung, Flottenverhältnis 1:400, Wasserhärte 10° dH, pH 6, Temperatur 20°).

Es entsteht auf der Papierbahn eine intensiv violette Färbung. Das Abwasser ist völlig farblos.

Beispiel 34:Analog zu den Angaben im Beispiel 32 werden 100 Teile Holzschliff mit 1 Teil des Farbstoffes aus Beispiel 1 gefärbt. Man erhält eine violette Färbung mit guten Echtheiten. Das Abwasser ist völlig farblos.

Beispiel 35. Man arbeitet wie im Beispiel 32, verwendet jedoch als Farbstoff eine Mischung aus 0,085 Teilen des Farbstoffes aus Beispiel 7 und 0,49 Teilen des Farbstoffes der Formel 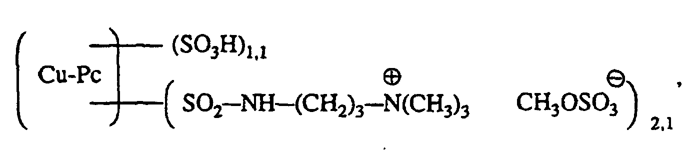 worin Cu-Pc den Kupferphthalocyaninrest bedeutet. Man erhält rotstichig blau gefärbtes Papier.

Beispiel 36: Man arbeitet wie im Beispiel 32, verwendet jedoch als Farbstoff eine Mischung aus 0,043 Teilen des Farbstoffes aus Beispiel 8 und 0,735 Teilen des Farbstoffes der Formel 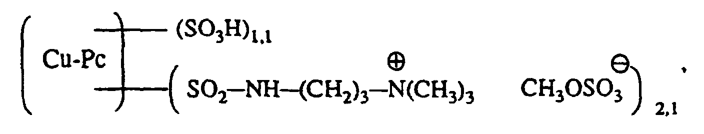 worin Cu-Pc den Kupferphthalocyaninrest bedeutet. Man erhält neutral blau gefärbtes Papier.

Beispiel 37:Ähnlich neutral blau gefärbtes Papier erhält man, wenn man wie im Beispiel 36 beschrieben arbeitet, jedoch eine Mischung aus 0,073 Teilen des Farbstoffes aus Beispiel 15 (hergestellt nach der im Beispiel 8 beschriebenen Methode) und 0,7 Teilen des Farbstoffes der Formel 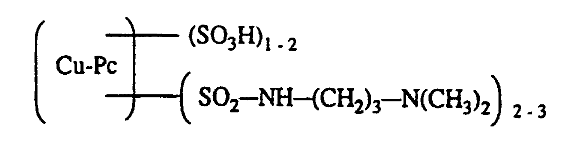 einsetzt.

## Patentansprüche

1. Verbindungen der Formel 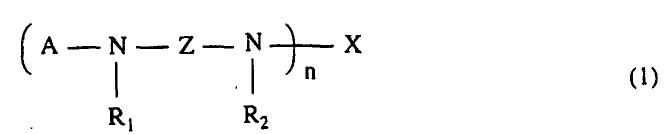 worin A und A₁ unabhängig voneinander je einen Rest der Formel 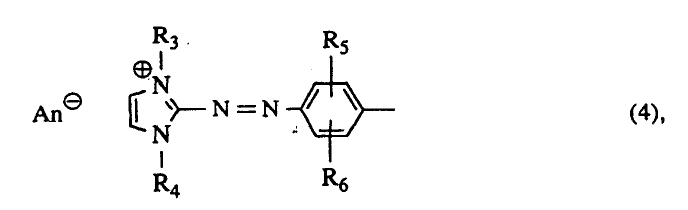 Z der Rest eines Alkylendiamins ist, dessen Alkylengruppen geradkettig, verzweigt oder cyclisch sind und unsubstituiert oder durch Halogen, Alkoxy oder Hydroxy substituiert sind, wobei die Alkylenketten durch -O- oder -NR₁- unterbrochen sein können, oder dass Z unsubstituiertes oder durch Alkyl, Alkoxy oder Halogen substituiertes 1,4-Phenylen oder 1,4-Naphthylen ist oder dass Z zusammen mit den beiden benachbarten N-Atomen und R₁ und R₂ einen Piperazinring bildet,
R₁ und R₂ unabhängig voneinander je Wasserstoff oder gegebenenfalls substituiertes C₁-C₄-Alkyl bedeuten oder zusammen mit den beiden N-Atomen, an die sie gebunden sind, und mit Z oder Z₂ einen 5-, 6- oder 7-Ring bilden,
X den Rest eines Brückengliedes,
n 2, 3 oder 4,
R₃ und R₄ unabhängig voneinander je Wasserstoff oder gegebenenfalls substituiertes C₁-C₄-Alkyl,
R₅ und R₆ unabhängig voneinander je Wasserstoff oder gegebenenfalls substituiertes C₁-C₄-Alkyl oder C₁-C₄-Alkoxy und
An^{⊖} ein farbloses Anion bedeutet.

2. Farbstoffe gemäss Anspruch 1, **dadurch gekennzeichnet, dass** Z ein unsubstituiertes C₂-C₈-Alkylen, insbesondere ein C₃-C₆-Alkylen ist oder dass Z zusammen mit den beiden benachbarten N-Atomen und R₁ und R₂ einen Piperazinring bildet oder dass Z ein unsubstituiertes Phenylen oder Naphthylen ist, insbesondere unsubstituiertes 1,4-Phenylen.

3. Farbstoffe gemäss Anspruch 1, **dadurch gekennzeichnet, dass** A ein Rest der Formel (4) ist,
worin R₃ und R₄ je Methyl oder Ethyl bedeuten.

4. Farbstoffe gemäss einem der Ansprüche 1 bis 3, **dadurch gekennzeichnet, dass** A ein Rest der Formel (4) ist, worin R₅ und R₆ Methoxy, Methyl oder Wasserstoff bedeuten.

5. Farbstoffe gemäss einem der Ansprüche 1 bis 4, **dadurch gekennzeichnet, dass** X der Rest von Phosgen, Bernsteinsäuredichlorid, Oxalsäuredichlorid, Terephthalsäuredichlorid, Ethylendibromid, Xyloldichlorid oder von Dihalogentriazinen der Formeln 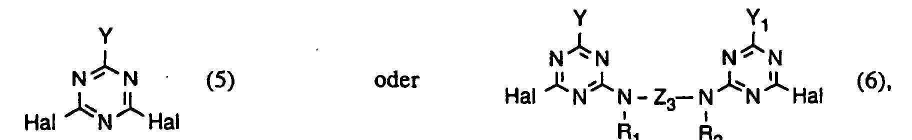 ist, worin
Hal Halogen,
Y und Y₁ unabhängig voneinander je einen Rest A der oben angegebenen Formel (4), Halogen, Hydroxy, Amino, Monoalkylamino, Dialkylamino oder den Rest eines cyclischen Amins,
Z₃ den Rest eines aliphatischen oder aromatischen Diamins und
R₁ und R₂ unabhängig voneinander je Wasserstoff oder gegebenenfalls substituiertes C₁-C₄-Alkyl bedeuten.

6. Farbstoffe gemäss Anspruch 5, **dadurch gekennzeichnet, dass** X sich von Verbindungen der Formeln (5) oder (6) ableitet, worin Y und Y₁ unabhängig voneinander je einen Rest A der oben angegebenen Formel (4) bedeuten oder eine der folgenden Bedeutungen aufweisen: Chlor, Hydroxy, Amino, Mono-C₁-C₈-Alkylamino, Di-C₁-C₈-Alkylamino, 1-Piperidino oder 1-Piperazino, wobei der 1-Piperazinorest am nicht mit dem Triazinring verbundenen N-Atom durch Alkyl substituiert sein kann und worin die Alkylgruppen unsubstituiert oder durch Hydroxy, Amino, Mono-C₁-C₄-Alkylamino oder Di-C₁-C₄-Alkylamino substituiert sind.

7. Farbstoffe gemäss einem der Ansprüche 5 oder 6, **dadurch gekennzeichnet, dass** Z₃ einen C₂-C₈-Alkylenrest bedeutet oder zusammen mit den beiden benachbarten N-Atomen und R₁ und R₂ einen Piperazinring bildet.

8. Farbstoffe gemäss einem der Ansprüche 1 bis 7, **dadurch gekennzeichnet, dass** Hal Chlor bedeutet.

9. Farbstoffe gemäss einem der Ansprüche 1 bis 8, **dadurch gekennzeichnet, dass** als Anion ein Chlorid, Hydrogensulfat, Sulfat, Methosulfat, Phosphat, Formiat, Lactat oder Acetat verwendet wird.

10. Farbstoffe der Formel 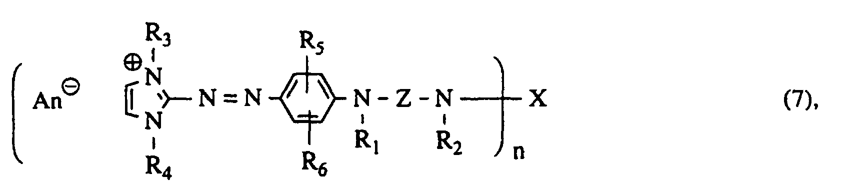 worin
Z ein Phenylen- oder Naphthylenrest, oder ein unsubstituierter C₂-C₈-Alkylenrestist oder worin Z zusammen mit den beiden benachbarten N-Atomen und R₁ und R₂ einen Piperazinring bildet,
R₁ und R₂ unabhängig voneinander jeweils Methyl oder Wasserstoff,
R₃ und R₄ unabhängig voneinander jeweils Methyl oder Ethyl,
R₅ und R₆ unabhängig voneinander jeweils Methoxy, Methyl oder Wasserstoff,
n 2, 3 oder 4,
An^{⊖} ein farbloses Anion und
X der Rest eines Brückengliedes, ausgewählt aus der Gruppe, bestehend aus Phosgen, Bernsteinsäuredichlorid, Oxalsäuredichlorid, Terephthalsäuredichlorid, Ethylendibromid, Xyloldichlorid und Dihalogentriazinen der Formeln 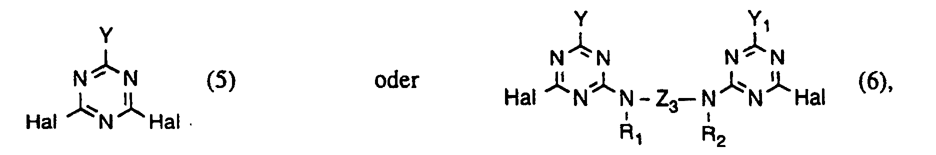 ist, worin
Hal Chlor,
Y und Y₁ unabhängig voneinander je einen Rest A der Formel 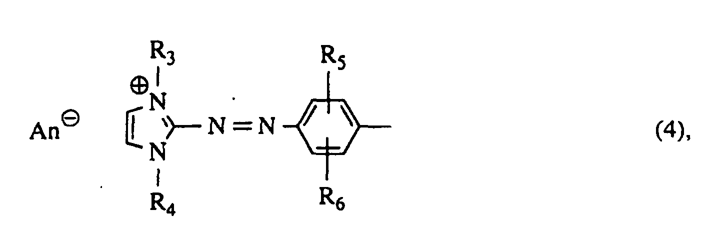 bedeuten oder Chlor, Hydroxy, Amino, Mono-C₁-C₈-Alkylamino, Di-C₁-C₈-Alkylamino, 1-Piperidino oder 1-Piperazino, wobei der 1-Piperazinorest am nicht mit dem Triazinring verbundenen N-Atom durch Alkyl substituiert sein kann und worin die Alkylgruppen durch Hydroxy, Amino, Mono-C₁-C₄-Alkylamino oder Di-C₁-C₄-Alkylamino substituiert sein können, und
Z₃ einen C₂-C₈-Alkylenrest bedeutet oder Z₃ zusammen mit den beiden benachbarten N-Atomen und R₁ und R₂ einen Piperazinring bildet.

11. Farbstoffe gemäss Anspruch 11, worin Z ein 1,4-Phenylenrest oder ein unsubstituierter C₃-C₆-Alkylenrest ist oder worin Z zusammen mit den beiden benachbarten N-Atomen und R₁ und R₂ einen Piperazinring bildet.

12. Verfahren zur Herstellung von Farbstoffen der Formel (1) gemäss Anspruch 1 **dadurch gekennzeichnet, dass** man eine Verbindung der Formel 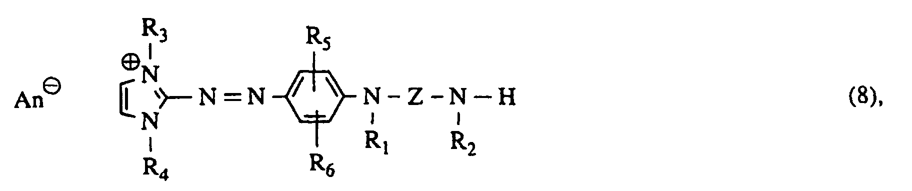 mit einem Brückenglied der Formel Hal-X-Hal umsetzt,
worin R₁, R₂, R₃, R₄, R₅, R₆, Z und An^{⊖} die unter den Formeln (1) und (4) angegebenen Bedeutungen aufweisen, und Hal Fluor, Brom, Jod oder Chlor bedeuten.

13. Verbindungen der Formel 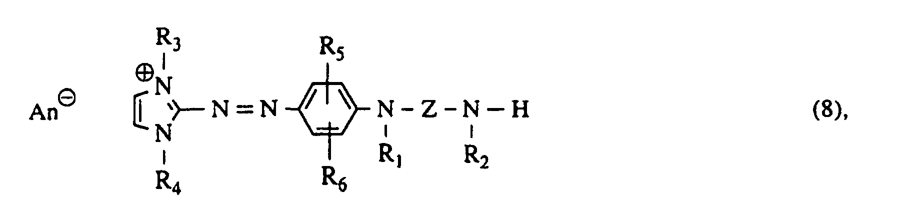 worin R₁, R₂, R₃, R₄, R₅, R₆, Z und An^{⊖} die unter den Formeln (1) und (4) im Anspruch 1 angegebenen Bedeutungen aufweisen.

14. Verfahren zur Herstellung von Verbindungen der Formel (8) gemäss Anspruch 13, **dadurch gekennzeichnet, dass** man eine Verbindung der Formel 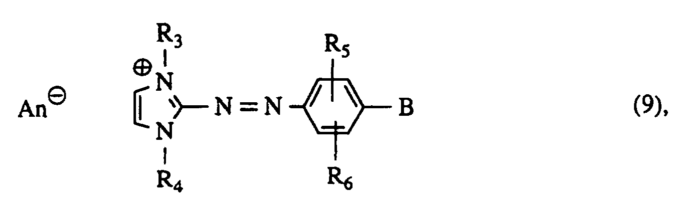 mit einem Diamin der Formel 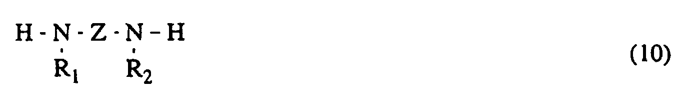 umsetzt,wobei
B Alkoxy oder Halogen bedeutet und
R₁, R₂, R₃, R₄, R₅, R₆, Z und An^{⊖} die unter den Formeln (1) und (4) angegebenen Bedeutungen aufweisen.

15. Verfahren zum Färben von Haaren, **dadurch gekennzeichnet, dass** man die Haare mit einem Farbstoff der Formel (8) gemäss Patentanspruch 13 behandelt.

16. Verfahren zum Färben von Papier, **dadurch gekennzeichnet, dass** man das Papier mit einem Farbstoff der Formel (1) gemäss Anspruch 1 behandelt.

17. Das nach dem Verfahren gemäss Anspruch 16 erhaltene gefärbte Papier.

18. Feste Farbstoffzubereitungen zum Färben von Papier, **dadurch gekennzeichnet, dass** sie mindestens einen Farbstoff gemäss Anspruch 1 enthalten.

19. Flüssige Farbstoffzubereitungen zum Färben von Papier, **dadurch gekennzeichnet, dass** sie mindestens einen Farbstoff gemäss Anspruch 1 enthalten.

20. Farbstoffmischungen, enthaltend einen Farbstoff der Formel (1) und einen kationischen Kupferphthalocyaninfarbstoff.

## Claims

1. A compound of the formula 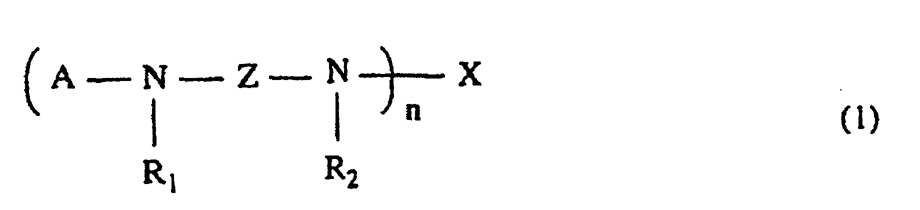 in which A and A₁ independently of one another are each a radical of the formula 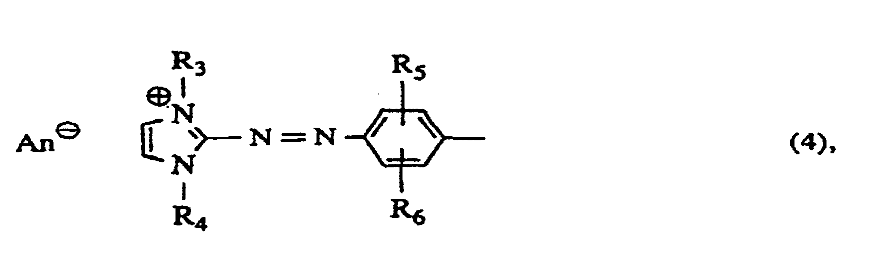 Z is the radical of an alkylenediamine whose alkylene groups are straight-chain, branched or cyclic and are unsubstituted or substituted by halogen, alkoxy or hydroxy, where the alkylene chains can be interrupted by -O- or -NR₁-, or Z is 1,4-naphthylene or 1,4-phenylene which is unsubstituted or substituted by alkyl, alkoxy or halogen, or Z, together with the two adjacent nitrogen atoms and R₁ and R₂, forms a piperazine ring,
R₁ and R₂ independently of one another are each hydrogen or substituted or unsubstituted C₁-C₄alkyl or, together with the two nitrogen atoms to which they are attached and with Z or Z₂, form a 5-, 6- or 7-membered ring,
X is the radical of a bridging member,
n is 2, 3 or 4,
R₃ and R₄ independently of one another are each hydrogen or substituted or unsubstituted C₁-C₄alkyl,
R₅ and R₆ independently of one another are each hydrogen or substituted or unsubstituted C₁-C₄alkyl or C₁-C₄alkoxy and
An^{⊖} is a colourless anion.

2. A dye according to claim 1, wherein Z is an unsubstituted C₂-C₈alkylene, in particular a C₃-C₆alkylene, or Z, together with the two adjacent nitrogen atoms and R₁ and R₂, forms a piperazine ring, or Z is an unsubstituted phenylene or naphthylene, in particular unsubstituted 1,4-phenylene.

3. A dye according to claim 1, wherein A is a radical of the formula (4) in which R₃ and R₄ are methyl or ethyl.

4. A dye according to any one of claims 1 to 3, wherein A is a radical of the formula (4) in which R₅ and R₆ are methoxy, methyl or hydrogen.

5. A dye according to any one of claims 1 to 4, wherein X is the radical of phosgene, succinyl dichloride, oxalyl dichloride, terephthaloyl dichloride, ethylene dibromide, xylene dichloride or of a dihalotriazine of the formula 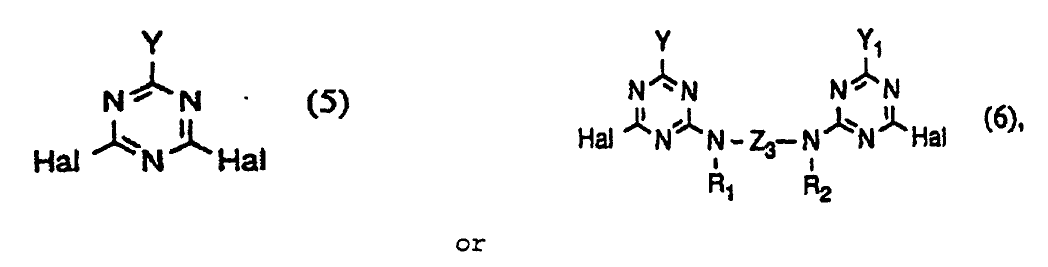 in which
Hal is halogen,
Y and Y₁ independently of one another are each a radical
A of the above formula (4) or are halogen, hydroxyl, amino, monoalkylamino or dialkylamino, or the radical of
a cylic amine,
Z₃ is the radical of an aliphatic or aromatic diamine, and
R₁ and R₂ independently of one another are each hydrogen or substituted or unsubstituted C₁-C₄alkyl.

6. A dye according to claim 5, wherein X is derived from compounds of the formula (5) or (6) in which Y and Y₁ independently of one another are each a radical A of the above formula (4) or have one of the following meanings: chlorine, hydroxyl, amino, mono-C₁-C₈alkylamino, di-C₁-C₈alkylamino, 1-piperidino or 1-piperazino, where the 1-piperazino radical can be substituted by alkyl at the nitrogen atom not attached to the triazine ring, and in which the alkyl groups are unsubstituted or substituted by hydroxyl, amino, mono-C₁-C₈alkylamino or di-C₁-C₈alkylamino.

7. A dye according to either of claims 5 and 6, wherein Z₃ is a C₂-C₈alkylene radical or, together with the two adjacent nitrogen atoms and R₁ and R₂, forms a piperazine ring.

8. A dye according to any one of claims 1 to 7, wherein Hal is chlorine.

9. A dye according to any one of claims 1 to 8, wherein the anion used is a chloride, hydrogen sulfate, sulfate, methosulfate, phosphate, formate, lactate or acetate.

10. A dye of the formula 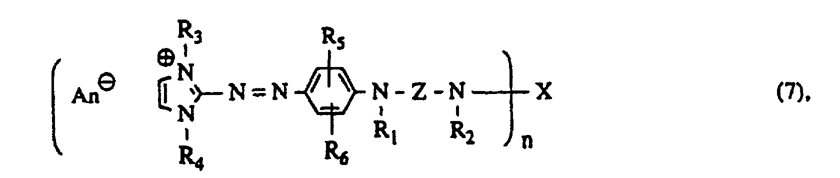 in which
Z is a phenylene or naphthylene radical or an unsubstituted C₂-C₈alkylene radical, or in which Z, together with the two adjacent nitrogen atoms and R₁ and R₂, forms a piperazine ring,
R₁ and R₂ independently of one another are each methyl or hydrogen,
R₃ and R₄ independently of one another are each methyl or ethyl,
R₅ and R₆ independently of one another are each methoxy, methyl or hydrogen,
n is 2, 3 or 4,
An^{⊖} is a colourless anion and
X is the radical of a bridging member selected from the group consisting of phosgene, succinyl dichloride, oxalyl dichloride, terephthaloyl dichloride, ethylene dibromide, xylene dichloride and dihalotriazines of the formula 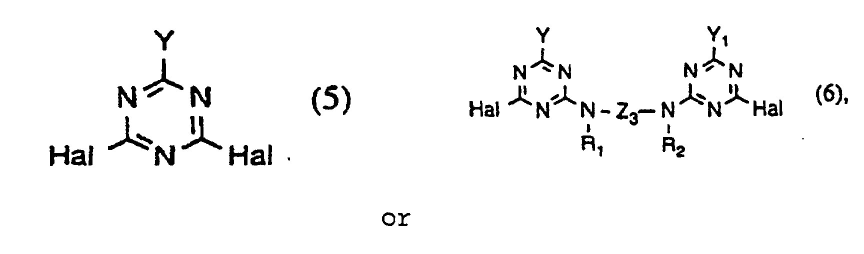 in which
Hal is chlorine,
Y and Y₁ independently of one another are each a radical A of the formula 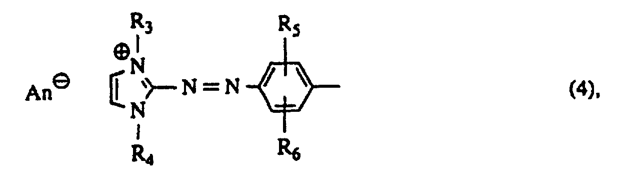 or are chlorine, hydroxyl, amino, mono-C₁-C₈alkylamino, di-C₁-C₈alkylamino, 1-piperidino or 1-piperazino, in which case the 1-piperazino radical can be substituted by alkyl at the nitrogen atom not attached to the triazine ring, and in which the alkyl groups can be substituted by hydroxyl, amino, mono-C₁-C₄alkylamino or di-C₁-C₄alkylamino, and
Z₃ is a C₂-C₈alkylene radical or, together with the two adjacent nitrogen atoms and R₁ and R₂, forms a piperazine ring.

11. A dye according to claim 10, in which Z is a 1,4-phenylene radical or an unsubstituted C₃-C₆alkylene radical or in which Z, together with the two adjacent nitrogen atoms and R₁ and R₂, forms a piperazine ring.

12. A process for the preparation of a dye of the formula (1) according to claim 1, which comprises reacting a compound of the formula 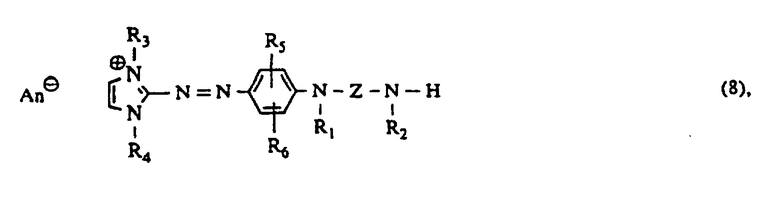 with a bridging member of the formula Hal-X-Hal,
in which R₁, R₂, R₃, R₄, R₅, R₆, Z and An^{⊖} are as defined under formulae (1) and (4), and Hal is fluorine, bromine, iodine or chlorine.

13. A compound of the formula 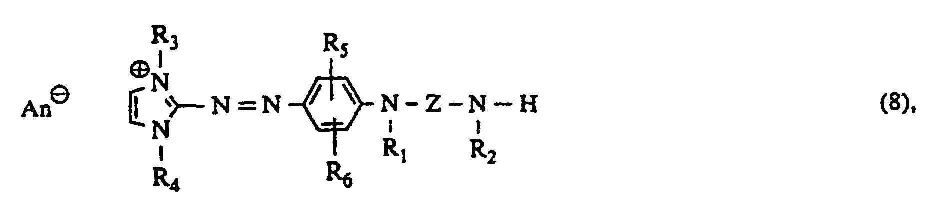 in which R₁, R₂, R₃, R₄, R₅, R₆, Z and An^{⊖} are as defined under formulae (1) and (4) in claim 1.

14. A process for the preparation of a compound of the formula (8) according to claim 13, which comprises reacting a compound of the formula 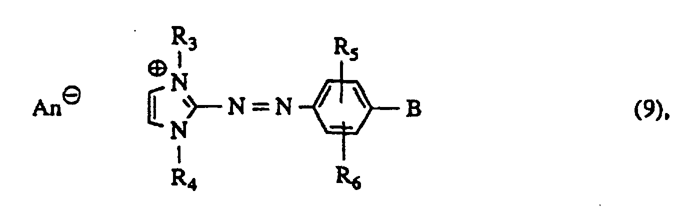 with a diamine of the formula 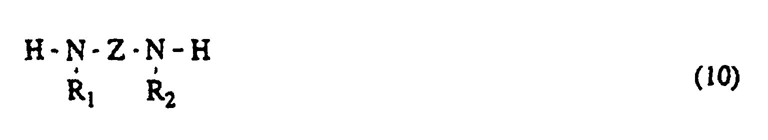 in which
B is alkoxy or halogen, and
R₁, R₂, R₃, R₄, R₅, R₆, Z and An^{⊖} are as defined under formulae (1) and (4).

15. A method of dyeing hair, which comprises treating the hair with a dye of the formula (8) according to claim 13.

16. A method of dyeing paper, which comprises treating the paper with a dye of the formula (1) according to claim 1.

17. Dyed paper obtained by the method according to claim 16.

18. A solid dye preparation for the dyeing of paper, which comprises at least one dye according to claim 1.

19. A liquid dye preparation for the dyeing of paper, which comprises at least one dye according to claim 1.

20. A dye mixture comprising a dye of the formula (1) and a cationic copper phthalocyanine dye.

## Revendications

1. Composés de formule 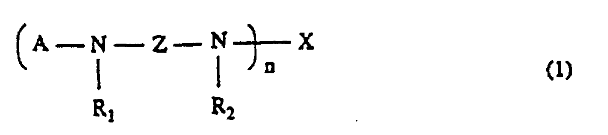 où A et A₁ représentent chacun, indépendamment l'un de l'autre, un reste de formule 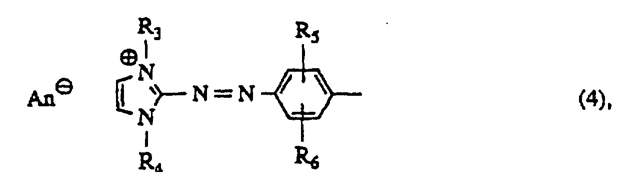
Z représente le reste d'une alkylènediamine, dont les groupes alkylènes sont linéaires, ramifiés ou cycliques et non substitués ou substitués par des substituants halogène, alkoxy ou hydroxy, les chaînes alkylènes pouvant être interrompues par des groupes -O- ou -NR₁-, ou que Z représente des groupes 1,4-phénylène ou 1,4-naphtylène non substitué ou substitué par des substituants alkyle, alkoxy ou halogène ou que Z forme, conjointement avec les deux atomes de N adjacents et avec R₁ et R₂, un cycle pipérazine,
R₁ et R₂ représentent chacun, indépendamment l'un de l'autre, un atome d'hydrogène ou un groupe alkyle en C₁-C₄ éventuellement substitué ou forment, conjointement avec les deux atomes de N auxquels ils sont liés, et avec Z ou Z₂, un cycle à 5, 6 ou 7 chaînons,
X représente le reste d'un élément de pontage,
n vaut 2, 3 ou 4,
R₃ et R₄ représentent chacun, indépendamment l'un de l'autre, un atome d'hydrogène ou un groupe alkyle en C₁-C₄ éventuellement substitué,
R₅ et R₆ représentent chacun, indépendamment l'un de l'autre, un atome d'hydrogène ou un groupe alkyle en C₁-C₄ ou alkoxy en C₁-C₄ éventuellement substitué,
An^{⊖} représente un anion incolore.

2. Colorants selon la revendication 1, **caractérisés en ce que** Z représente un groupe alkylène en C₃-C₈ non substitué, en particulier alkylène en C₃-C₆, ou **en ce que** Z forme, conjointement avec les deux atomes de N adjacents et avec R₁ et R₂, un cycle pipérazine, ou **en ce que** Z représente un groupe phénylène ou naphtylène non substitué, en particulier 1,4-phénylène non substitué.

3. Colorants selon la revendication 1, **caractérisés en ce que** A représente un reste de formule (4), où R₃ et R₄ représentent chacun un groupe méthyle ou éthyle.

4. Colorants selon l'une des revendications 1 à 3, **caractérisés en ce que** A représente un reste de formule (4), où R₅ et R₆ représentent chacun un groupe méthoxy, méthyle ou hydrogène.

5. Colorants selon l'une des revendications 1 à 4, **caractérisés en ce que** X représente le reste phosgène, dichlorure d'acide succinique, dichlorure d'acide oxalique, dichlorure d'acide téréphtalique, dibromure d'éthylène, dichlorure de xylène ou dihalogénotriazines de formules 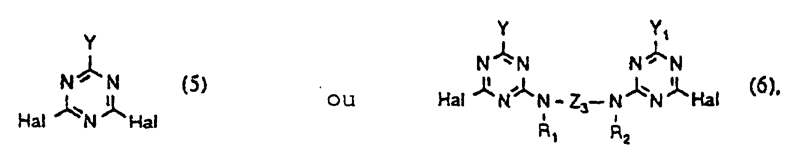 où
Hal représente un atome d'halogène,
Y et Y₁ représentent chacun, indépendamment l'un de l'autre, un reste A de formule (4) indiquée ci-dessus, halogène, hydroxy, amino, monoalkylamino, dialkylamino ou le reste d'une amine cyclique,
Z₃ représente le reste d'une diamine aliphatique ou aromatique et
R₁ et R₂ représentent chacun, indépendamment l'un de l'autre, un atome d'hydrogène ou un groupe alkyle en C₁-C₄ éventuellement substitué.

6. Colorants selon la revendication 5, **caractérisés en ce que** X dérive des composés de formules (5) ou (6), où Y et Y₁ représentent chacun, indépendamment l'un de l'autre, un reste A de formule (4) indiquée ci-dessus ou présentent l'une des significations suivantes : chlore, hydroxy, amino, mono-(alkyl en C₁-C₈)amino, di-(alkyl en C₁-C₈)amino, 1-pipéridino ou 1-pipérazino, le reste 1-pipérazino pouvant être substitué par un substituant alkyle sur l'atome de N non lié au cycle triazine et où les groupes alkyles sont non substitués ou substitués par des substituants hydroxy, amino, mono-(alkyl en C₁-C₄)-amino ou di(alkyl en C₁-C₄)-amino.

7. Colorants selon l'une des revendications 5 ou 6, **caractérisés en ce que** Z₃ représente un reste alkylène en C₂-C₈ ou forme, conjointement avec les atomes de N adjacents et avec R₁ et R₂, un cycle pipérazine.

8. Colorants selon l'une des revendications 1 à 7, **caractérisés en ce que** Hal représente un atome de chlore.

9. Colorants selon l'une des revendications 1 à 8, **caractérisés en ce qu'**on utilise en tant qu'anion un chlorure, un bisulfate, un sulfate, un méthosulfate, un phosphate, un formiate, un lactate ou un acétate.

10. Colorants de formule 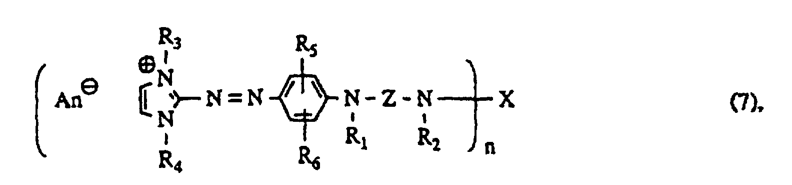 où
Z représente un reste phénylène ou naphtylène, ou un reste alkylène en C₂-C₈ non substitué, ou dans lesquels Z forme, conjointement avec les deux atomes de N adjacents et avec R₁ et R₂, un cycle pipérazine,
R₁ et R₂ représentent chacun, indépendamment l'un de l'autre, un groupe méthyle ou un atome d'hydrogène,
R₃ et R₄ représentent chacun, indépendamment l'un de l'autre, un groupe méthyle ou éthyle,
R₅ et R₆ représentent chacun, indépendamment l'un de l'autre, un groupe méthoxy, méthyle ou un atome d'hydrogène,
n vaut 2, 3 ou 4,
An^{⊖} représente un anion incolore et
X représente le reste d'un élément de pontage, pris dans le groupe comprenant le phosgène, le dichlorure d'acide succinique, le dichlorure d'acide oxalique, le dichlorure d'acide téréphtalique, le dibromure d'éthylène, le dichlorure de xylène et des dihalogénotriazines de formules 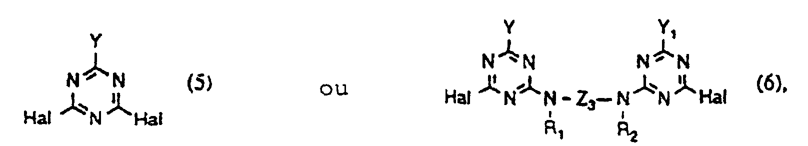
où
Hal représente un atome de chlore,
Y et Y₁ représentent chacun, indépendamment l'un de l'autre, un reste de formule 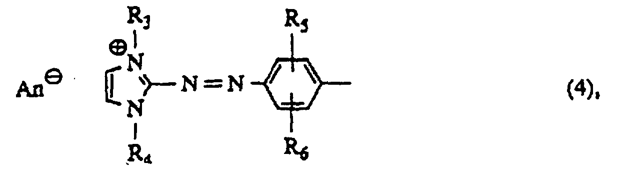 ou un atome de chlore, des groupes amino, mono-(alkyl en C₁-C₈)amino, di-(alkyl en C₁-C₈)amino, 1-pipéridino ou 1-pipérazino, le reste 1-pipérazino pouvant être substitué par un substituant alkyle sur l'atome de N non lié au cycle triazine et où les groupes alkyle peuvent être substitués par des substituants hydroxy, amino, mono-(alkyl en C₁-C₄)amino ou di-(alkyl en C₁-C₄)-amino, et
Z₃ représente un reste alkylène en C₂-C₈, ou Z₃ forme, conjointement avec les deux atomes de N adjacents et R₁ et R₂, un cycle pipérazine.

11. Colorants selon la revendication 10, où Z représente un reste 1,4-phénylène ou un reste alkylène en C₃-C₆ non substitué ou Z forme, conjointement avec les deux atomes de N adjacents et avec R₁ et R₂, un cycle pipérazine.

12. Procédé pour la préparation de colorants de formule (1) selon la revendication 1, **caractérisé en ce qu'**on fait réagir un composé de formule 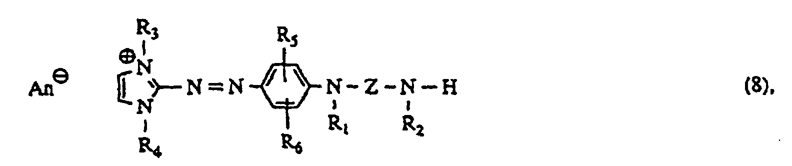 sur un élément de pontage de formule Hal-X-Hal,
où R₁, R₂, R₃, R₄, R₅, R₆, Z et An^{⊖} possèdent les significations données aux formule (1) et (4), et Hal représente un atome de fluor, de brome, d'iode ou de chlore.

13. Composés de formule 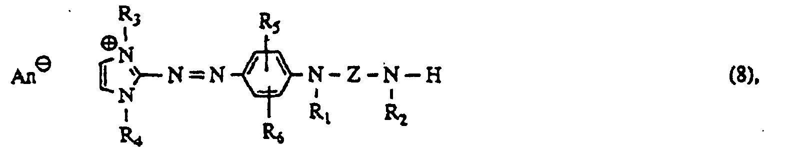 ù R₁, R₂, R₃, R₄, R₅, R₆, Z et An^{⊖} possèdent les significations données aux formules (1) et (4) à la revendication 1.

14. Procédé pour la préparation de composés de formule (8) selon la revendication 13, **caractérisé en ce qu'**on fait réagir un composé de formule 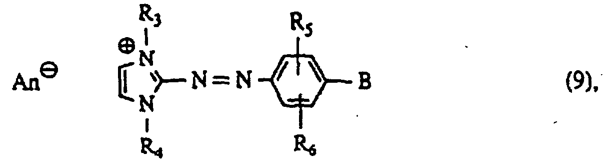 sur une diamine de formule 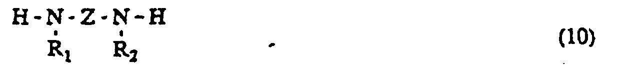 où
B représente un groupe alkoxy ou halogène et
R₁, R₂, R₃, R₄, R₅, R₆, Z et An^{⊖} présentent les significations données aux formules (1) et (4).

15. Procédé pour la teinture de cheveux, **caractérisé en ce qu'**on traite les cheveux par un colorant de formule (8) selon la revendication 13.

16. Procédé pour la teinture de papier, **caractérisé en ce qu'**on traite le papier par un colorant de formule (1) selon la revendication 1.

17. Papier coloré obtenu selon le procédé selon la revendication 16.

18. Préparations de colorants solides pour la teinture de papier, **caractérisées en ce qu'**elles contiennent au moins un colorant selon la revendication 1.

19. Préparations de colorants liquides pour la teinture de papier, **caractérisées en ce qu'**elles contiennent au moins un colorant selon la revendication 1.

20. Mélanges de colorants contenant un colorant de formule (1) et un colorant de phtalocyanine de cuivre cationique.
